# EUROPEAN PATENT APPLICATION

(11) **EP 4 534 356 A1**
(43) Date of publication of application: **09.04.2025**
(21) Application number: 23935617.3
(22) Date of filing: 23.08.2023
(51) Int. Cl.: B60R 13/08

(54) **FLAME-RETARDANT SOUNDPROOFING MATERIAL FOR VEHICLE**

(71) Applicant: Tokai Chemical Industries, Ltd., Kani-gun, Gifu 505-0116 (JP); Sumitomo Riko Company Limited, Komaki-shi, Aichi 485-8550 (JP)
(72) Inventor: TAGUCHI, Hiroki, Mitake, Gifu 505-0116 (JP); SUZUKI, Yasuo, Mitake, Gifu 505-0116 (JP); KANADA, Masahito, Mitake, Gifu 505-0116 (JP); OWAKI, Junki, Komaki-shi, Aichi 485-8550 (JP); TOMIYAMA, Koji, Komaki-shi, Aichi 485-8550 (JP)
(74) Representative: Müller-Boré & Partner Patentanwälte PartG mbB
(86) International application number: PCT/JP2023/030252
(87) International publication number: WO 2025/041291

(57) **Abstract**

A flame-retardant soundproofing material for vehicles includes a polyurethane foam obtained by foam-molding a urethane resin composition. The urethane resin composition includes an isocyanate component (A), a polyol component (B), a flame-retardant plasticizer (C), and an antioxidant (D). The isocyanate component (A) includes a mixture of 2,4'-diphenylmethane diisocyanate and 4,4'-diphenylmethane diisocyanate, and one or more modified products selected from a carbodiimide-modified product and a uretonimine-modified product of at least one of 2,4'-diphenylmethane diisocyanate and 4,4'-diphenylmethane diisocyanate of the mixture.

## Description

### Technical Field

The disclosure relates to a flame-retardant soundproofing material for vehicles used in an engine compartment and the like of a vehicle.

### Related Art

In a vehicle such as an automobile, various measures are implemented to reduce noise leakage to outside of the vehicle or into a vehicle interior. For example, in the engine compartment of a vehicle, to reduce radiation sound from the engine, which is a noise source, a soundproofing material such as an engine cover, a side cover, an oil pan cover, etc. is disposed around the engine. In recent years, attempts have been made to dispose the soundproofing material also around a fuel pipe, a transmission, etc. to further enhance soundproofing properties. For example, the soundproofing material disposed near rotating bodies that constitute the transmission requires a desired rigidity to prevent deformation and interference with the rotating bodies. Particularly, rigidity at high temperatures is important, and it is required that deformation such as sagging does not occur even at high temperatures (resistance to sagging). Further, in the usage environment around the engine, flame retardancy is also required in addition to soundproofing properties.

For example, Patent Document 1 describes a flame-retardant soundproofing and vibration-isolating material for vehicles using a flexible polyurethane foam obtained by reacting and foaming an isocyanate component and a polyol component. Patent Document 1 describes that a heat degradation resistance and a flame retardancy of the polyurethane foam are improved by using, as a main component of the isocyanate component, a monomeric MDI containing diphenylmethane diisocyanate and a carbodiimide-modified product and/or a uretonimine-modified product thereof.

### Related Art Documents

### Patent Documents

Patent Document 1: Japanese Patent Application Laid-Open No. 2003-97645
Patent Document 2: Japanese Patent Application Laid-Open No. H05-105811

### SUMMARY OF INVENTION

### Problem to Be Solved by Invention

In the polyurethane foam described in Patent Document 1, one or more modified products selected from a carbodiimide-modified product and a uretonimine-modified product are used as the isocyanate component. The use of the modified product increases intermolecular cohesion and thus improves the rigidity of the polyurethane foam. However, as the rigidity increases, since it becomes difficult for the foam to melt during burning, burning continues and flame retardancy decreases. Thus, there is a trade-off between improving rigidity and improving flame retardancy.

The disclosure has been made in view of these circumstances and an objective thereof is to provide a flame-retardant soundproofing material for vehicles that exhibits desired rigidity and flame retardancy in addition to soundproofing properties.

### Means for Solving Problem

(1) To solve the above problem, a flame-retardant soundproofing material for vehicles of the disclosure is a flame-retardant soundproofing material for vehicles that includes a polyurethane foam obtained by foam-molding a urethane resin composition. The urethane resin composition includes an isocyanate component (A), a polyol component (B), a flame-retardant plasticizer (C), and an antioxidant (D). The isocyanate component (A) includes a mixture of 2,4'-diphenylmethane diisocyanate and 4,4'-diphenylmethane diisocyanate, and one or more modified products selected from a carbodiimide-modified product and a uretonimine-modified product of at least one of 2,4'-diphenylmethane diisocyanate and 4,4'-diphenylmethane diisocyanate of the mixture.

In the flame-retardant soundproofing material for vehicles of the disclosure, a polyurethane foam with desired soundproofing properties, rigidity, and flame retardancy is realized by configuring specific components in the isocyanate component used as a raw material, and using the flame-retardant plasticizer and the antioxidant together. Regarding the isocyanate component, hereinafter, diphenylmethane diisocyanate will be referred to as "MDI" as appropriate, 2,4'-diphenylmethane diisocyanate will be referred to as "2,4'-MDI" as appropriate, and 4,4'-diphenylmethane diisocyanate will be referred to as "4,4'-MDI" as appropriate.

By using the modified product as the isocyanate component, intermolecular cohesion is enhanced, so a polyurethane foam with high rigidity not only at room temperature but also at high temperatures can be obtained. The modified product is manufactured by a carbodiimide reaction, in which NCO groups of two MDI molecules condense, and further by a uretonimine reaction, in which one more MDI molecule is added to the generated carbodiimide compound (carbodiimide-modified product). As a secondary reaction of the MDI carbodiimide reaction, a uretonimine compound (uretonimine-modified product) is also generated in a chemical equilibrium reaction. Generally, it is thought that most of the reaction products is the uretonimine-modified product due to the progression of the carbodiimide reaction. In this specification, the expression "one or more modified products selected from a carbodiimide-modified product and a uretonimine-modified product" is used to include all products obtained by the carbodiimide reaction of either or both of 2,4'-MDI and 4,4'-MDI in the modified product. This may also be expressed as "carbodiimide-modified product and/or uretonimine-modified product". The carbodiimide-modified product and the uretonimine-modified product may be obtained by known methods, for example, by reacting a single-component MDI or a multiple-component MDI containing isomers using a catalyst such as a phosphate ester.

The polyurethane foam constituting the flame-retardant soundproofing material for vehicles of the disclosure (hereinafter referred to as "polyurethane foam of the disclosure" as appropriate) includes the flame-retardant plasticizer. The flame-retardant plasticizer enters between crystals of polyurethane at high temperatures, softens the polyurethane foam, and makes it easier for the polyurethane foam to melt. For example, if a simple plasticizer without flame retardancy is used, although the polyurethane foam can easily melt during burning, the polyurethane foam itself may also burn and increase the flames. In this regard, the polyurethane foam of the disclosure does not have this concern since a flame-retardant plasticizer is used. Thus, in the polyurethane foam of the disclosure, even though the rigidity of the foam is increased by using the modified product as the isocyanate component, since the flame-retardant plasticizer is added, it becomes easy for the foam to melt during burning, and a decrease in flame retardancy is suppressed.

With the flame-retardant plasticizer added, the flame retardancy of the polyurethane foam is improved. However, if the added amount is increased from the perspective of improving flame retardancy, the polyurethane foam may soften and the rigidity may decrease. In this regard, in the polyurethane foam of the disclosure, the antioxidant is used together to ensure the flame retardancy while maintaining the rigidity of the polyurethane foam. The effects of the antioxidant are as follows. Upon thermal decomposition of the polyurethane, molecules are cut, and low molecular weight components are generated. Low molecular weight components are easily ignited, which thus promotes continuation of burning. With the antioxidant added, since thermal decomposition of the polyurethane is suppressed and generation of low molecular weight components is suppressed, ignition components can be reduced. In other words, in the polyurethane foam of the disclosure, by adding the antioxidant to preventively reduce easily ignitable components, flame retardancy can be imparted even without excessively adding the flame-retardant plasticizer. Accordingly, a balance between rigidity and flame retardancy, which has been difficult conventionally, is realized herein.

In addition, Patent Document 2 describes a liquid flame-retardant composition for polyurethane composed of 50 to 99 weight% of a flame-retardant organic phosphorus compound and 50 to 1 weight% of tribromoneopentyl alcohol (TBNPA). Patent Document 2 describes a configuration in which an antioxidant such as a hydroquinone compound and a trivalent organic phosphorus compound is further added to the mixture of the flame-retardant organic phosphorus compound and TBNPA. In Patent Document 2, it is an objective to provide a composition that can impart flame retardancy as a low-viscosity liquid using TBNPA. Thus, the use of an antioxidant is not essential, and the effects achieved by using together with the flame-retardant organic phosphorus compound are not described. Further, regarding the applicable polyurethane foam, only a configuration in which the isocyanate component is toluene diisocyanate (TDI) is described, and Patent Document 2 does not involve the technical spirit of increasing the rigidity of the polyurethane foam.

(2) In the above configuration, the modified product of the isocyanate component (A) may have a content ratio of 19 mass% or more with the total urethane resin composition being 100 mass%. Further, the content ratio of the modified product may be 30 mass% or less. According to these configurations, it is easy to balance the rigidity and the flame retardancy of the polyurethane foam.

(3) In any of the above configurations, the flame-retardant plasticizer (C) may have a content ratio of 3.7 mass% or more with the total urethane resin composition being 100 mass%. Further, the content ratio of the flame-retardant plasticizer may be 6.5 mass% or less. According to these configurations, it is easy to balance the rigidity and the flame retardancy of the polyurethane foam.

(4) In any of the above configurations, the flame-retardant plasticizer (C) may include a phosphate ester. According to this configuration, the polyurethane foam can be softened with a relatively small amount, and moldability is also good.

(5) In any of the above configurations, the antioxidant (D) may have a content ratio of 1.6 mass% or more with the total urethane resin composition being 100 mass%. Further, the content ratio of the antioxidant may be 2.4 mass% or less. According to these configurations, generation of low molecular weight components due to thermal decomposition of polyurethane can be effectively suppressed. As a result, the desired flame retardancy can be imparted even with a small formulation amount of the flame-retardant plasticizer. For example, combining this configuration with the configurations of (2) and (3) above is effective in imparting the desired rigidity and flame retardancy to the polyurethane foam.

(6) In any of the above configurations, the antioxidant (D) may include a hindered phenol compound. According to this configuration, the effect of suppressing thermal decomposition of polyurethane can be enhanced. For example, combining this configuration with the configuration of (4) above, it is possible to further enhance the rigidity and the flame retardancy of the polyurethane foam. Furthermore, it is more preferable to combine the configurations of (2), (3), and (5) above.

### Effects of Invention

The flame-retardant soundproofing material for vehicles of the disclosure exhibits desired rigidity and flame retardancy in addition to soundproofing properties.

### DESCRIPTION OF EMBODIMENTS

Hereinafter, embodiments of a flame-retardant soundproofing material for vehicles of the disclosure will be described. The embodiments are not limited to the following forms, and may be implemented in various modified forms and improved forms that can be carried out by those skilled in the art.

In the flame-retardant soundproofing material for vehicles of the disclosure, configurations other than a polyurethane foam are not particularly limited. The flame-retardant soundproofing material for vehicles of the disclosure may be composed of a polyurethane foam alone, or may be composed of a combination of a polyurethane foam and other components. For example, in the case of implementing the flame-retardant soundproofing material for vehicles of the disclosure as an engine cover, the engine cover may have a one-layer structure of the polyurethane foam, or may have a multi-layer structure including a soundproofing layer composed of the polyurethane foam and a skin layer covering a surface thereof. Further, "vehicles" as applications include not only automobiles but also airplanes, trains, etc.

### <Components of polyurethane foam>

The polyurethane foam of the disclosure is a foam-molded product of a urethane resin composition including an isocyanate component (A), a polyol component (B), a flame-retardant plasticizer (C), and an antioxidant (D).

### Isocyanate component (A)

The isocyanate component includes a mixture of 2,4'-MDI and 4,4'-MDI, and one or more modified products selected from a carbodiimide-modified product and a uretonimine-modified product of at least one of 2,4'-MDI and 4,4'-MDI of the mixture. A content ratio of 2,4'-MDI to 4,4'-MDI in the mixture may be determined as appropriate considering rigidity, moldability, etc. As described above, the modified product includes a product obtained by carbodiimide reaction of 2,4'-MDI or 4,4'-MDI, and a product obtained by carbodiimide reaction of 2,4'-MDI and 4,4'-MDI.

From the perspective of increasing the rigidity of the polyurethane foam, the content ratio of the modified product in the isocyanate component may be increased as much as possible. For example, the content ratio of the modified product is desirably 19 mass% or more with the total urethane resin composition being 100 mass%. The content ratio is more preferably 21 mass% or more. On the other hand, if the content ratio of the modified product is too high, the foam becomes less likely to melt during burning, and it becomes difficult for flames to drop. Considering this point, the content ratio of the modified product is desirably 30 mass% or less. The content ratio is more preferably 28 mass% or more.

In addition to the mixture and the modified product, the isocyanate component may include a prepolymer obtained by reaction of MDI and a polyol. In the case where the prepolymer is included, a viscosity of the urethane resin composition increases and a moldability is improved compared to the case without the prepolymer. A content ratio of the prepolymer is desirably 18 mass% or more and 30 mass% or less with the total urethane resin composition being 100 mass%. For example, upon reacting MDI with a polyol having a number of functional groups of 3, a prepolymer with three urethane bonds is obtained. Among these, the prepolymer is preferably an isocyanate-terminated prepolymer obtained by reacting MDI with a bifunctional polyether polyol. Herein, examples of the bifunctional polyether polyol may include a polyether polyol with a molecular weight of about 1000.

Although the mixture, the modified product, and the prepolymer have been described as the isocyanate component, inclusion of an isocyanate compound other than these components is not excluded if the polyurethane foam of the disclosure can be realized without hindering the effect of these components. Examples of such an isocyanate compound include, for example, polymeric MDI (polynuclear body) having three or more isocyanate groups and three or more benzene rings in one molecule. However, if polymeric MDI is included, since a crosslinked structure is formed in the polyurethane foam, the foam is less likely to melt during burning, and as a result, flame retardancy may decrease, which is not preferable.

### Polyol component (B)

As the polyol component, a polyhydroxy compound, a polyether polyol, a polyester polyol, a polyether polyamine, a polyester polyamine, an alkylene polyol, a urea dispersion polyol, a melamine-modified polyol, a polycarbonate polyol, an acrylic polyol, a polybutadiene polyol, a phenol-modified polyol, etc. are known. In the case of manufacturing the polyurethane foam of the disclosure, the polyether polyol is used as a main component. "Main component" means a component that accounts for 60 mass% or more with the total polyol component being 100 mass%. Thus, as the polyol component, the polyether polyol alone may be used, or the polyether polyol may be used as the main component in combination with other polyols as appropriate. For example, from the perspective of improving moldability, it is desirable to use a polyester polyol in combination. Further, even in the case of using the polyether polyol alone, multiple types with different numbers of functional groups, molecular weights, compatibilities, etc. may be used in combination.

The number of functional groups of the polyether polyol is desirably 2 or more and 4 or less. In the case where the number of functional groups is less than 2, since a chain reaction with the isocyanate component is easily interrupted and it becomes difficult to form a polymer, moldability decreases. For example, since a polyether polyol having a number of functional groups of 2 does not form a crosslinked structure, it is preferable in terms of easily dropping flames during burning to improve flame retardancy. A polyether polyol having a number of functional groups of 3 or more is preferable in terms of making the polyurethane foam hard and increasing rigidity by forming a crosslinked structure. However, if the number of functional groups exceeds 4, elongation of the polyurethane foam decreases, leading to a decrease in sound proofing properties.

Further, a mass average molecular weight of the polyether polyol is desirably 5000 or more and 8000 or less. In the case where the mass average molecular weight is less than 5000, the polyurethane foam becomes hard, leading to a decrease in soundproofing properties. If the mass average molecular weight exceeds 8000, a viscosity of the urethane resin composition becomes too high, and it becomes difficult to react with the isocyanate component and perform a foaming operation.

### Flame-retardant plasticizer (C)

Examples of the flame-retardant plasticizer may include a halogen-based or non-halogen-based phosphorus compound used as a flame retardant. The halogen-based phosphorus compound has poor plasticity and thus requires a large formulation amount, which may decrease foam-molding properties. Thus, the non-halogen-based phosphorus compound is preferable. The flame-retardant plasticizer may be liquid or solid, but from the perspective of mixing with liquid materials such as the isocyanate component, the liquid form is better. The flame-retardant plasticizer is preferably, for example, a phosphate ester such as trimethyl phosphate, tributyl phosphate, etc.

A content ratio of the flame-retardant plasticizer is desirably 3.7 mass% or more with the total urethane resin composition being 100 mass%, from the perspective of sufficiently exhibiting the effect of suppressing a decrease in flame retardancy. The content ratio is more preferably 4.0 mass% or more. On the other hand, from the perspective of avoiding a decrease in rigidity due to addition of the flame-retardant plasticizer, the content ratio of the flame-retardant plasticizer is desirably 6.5 mass% or less. The content ratio is more preferably 6.0 mass% or less.

### Antioxidant (D)

Examples of the antioxidant may include a hindered phenol compound, a hindered amine compound, etc. Among these, the hindered phenol compound has a high effect in suppressing thermal decomposition of polyurethane and is thus preferable. The hindered phenol compound is a phenol compound having substituents that exhibit steric hindrance at one or both ortho positions of the phenolic hydroxyl group. The antioxidant may be liquid or solid, but the liquid form has a relatively low molecular weight and is prone to volatilization when heated, so the liquid antioxidant itself may burn and increase the flames. Thus, from the perspective of enhancing flame retardancy, the antioxidant is preferably in solid form.

A content ratio of the antioxidant is desirably 1.6 mass% or more with the total urethane resin composition being 100 mass%, to sufficiently exhibit an effect of suppressing thermal decomposition of polyurethane and reducing low molecular weight components which are ignition components. The content ratio is more preferably 1.8 mass% or more. On the other hand, from the perspective of avoiding a decrease in flame retardancy due to burning of the antioxidant itself, the content ratio of the antioxidant is desirably 2.4 mass% or less. The content ratio is more preferably 2.2 mass% or less.

### Other components (E)

In addition to (A) to (D) described above, the urethane resin composition may appropriately include known materials used in manufacturing a polyurethane foam, such as a catalyst, a foaming agent, a foam stabilizer, a crosslinking agent, an antistatic agent, a viscosity reducer, a stabilizer, a filler, a pigment, etc. Among these, examples of the catalysts may include: an amine catalyst such as tetramethylethylenediamine, bis(2-dimethylaminoethyl) ether, triethylenediamine, triethylamine, N,N,N',N'-tetramethylhexane-1,6-diamine, N,N,N',N'',N''-pentamethyl-diethylenetriamine, N,N,N',N"',N‴,N‴-hexamethyltriethylene-tetraamine, N,N',N'-trimethylaminoethylpiperazine, etc.; an acid such as formic acid, citric acid, butyric acid, 2-ethylhexanoic acid, etc.; and an organometallic catalyst such as tin laurate, tin octanoate, etc. The foaming agent is preferably water. In addition to water, examples may include methylene chloride, CO₂ gas, etc. The foam stabilizer is preferably a silicone-based foam stabilizer, and the crosslinking agent is preferably diethylene glycol, triethanolamine, diethanolamine, etc.

### <Properties of polyurethane foam>

### (1) Rigidity

The rigidity of the polyurethane foam of the disclosure is desirably, for example, in a form with an Asker C hardness of 63 or higher. The hardness is more preferably 65 or higher. The Asker C hardness may be measured using an "ASKER Durometer Type C " manufactured by Kobunshi Keiki Co., Ltd., based on a spring hardness test type C specified in JIS K7312-1996.

### (2) Flame retardancy

The flame retardancy of the polyurethane foam may be evaluated, for example, by conducting a horizontal burning test according to the UL94 standard. The horizontal burning test is performed by fixing a sample at one end and holding horizontally, and applying a gas burner flame to the free end for 30 seconds. In the case where the sample continues to burn after the applied flame is removed, a burning rate thereof is measured. The polyurethane foam of the disclosure desirably has a flame retardancy at the HB level of the UL94 standard. The criteria for determining on having a flame retardancy at the HB level are as follows. (1) For a sample with a thickness of 3.05 mm or more, the burning rate does not exceed 38.1 mm per minute. (2) For a sample with a thickness of 3.05 mm or less, the burning rate does not exceed 76.2 mm per minute, or the burning stops before the flame reaches a point 102 mm from the end of the sample. The polyurethane foam of the disclosure desirably has a flame retardancy at the HB level of the UL94 standard, not only in a normal condition, i.e., in the same condition as upon being manufactured, but also after thermal aging upon being held at 135°C for 168 hours. Further, the flame retardancy at the HB level of the UL94 standard is desirably maintained even after thermal aging at 135°C for 336 hours, and further after thermal aging at 135°C for 600 hours. The thermal aging may be performed by placing the sample in an oven at 135°C and keeping for a predetermined duration.

### <Manufacturing method of polyurethane foam>

The polyurethane foam of the disclosure is manufactured by foam-molding a urethane resin composition. First, a polyol component is mixed in advance with an antioxidant and other components such as a catalyst, a foaming agent, a foam stabilizer, etc. to prepare a premix polyol. Next, the prepared premix polyol is mixed with an isocyanate component and a flame-retardant plasticizer and foam-molded. For example, after mechanically stirring the premix polyol with the isocyanate component and the flame-retardant plasticizer using a propeller or the like, the mixture may be injected into a mold for foam-molding. Alternatively, a mixed raw material may be prepared in advance by mixing the isocyanate component and the flame-retardant plasticizer, and using a high-pressure injection machine or the like, the premix polyol and the mixed raw material may be discharged at high pressure respectively, mixed by colliding the two components, and foam-molded (impingement stirring method). The impingement stirring method makes continuous production possible and is thus suitable for mass production. Further, compared to the mechanical stirring method, the impingement stirring method eliminates the need for a cleaning process of a container as required upon each mixing, so the yield is also improved. Thus, manufacturing costs can be reduced.

The premix polyol and the isocyanate component are desirably formulated such that an isocyanate index (equivalent ratio of isocyanate group to active hydrogen group) is 1.0 or more and 1.5 or less, and preferably 1.0 or more and 1.2 or less. In the case where the isocyanate index is less than 1.0, the flame retardancy decreases. Further, if the isocyanate index exceeds 1.5, the moldability decreases.

### Examples

Next, the disclosure will be described more specifically with reference to Examples.

### <Manufacturing of samples of polyurethane foam>

First, with respect to 100 parts by mass of a polyether polyol ("SBU Polyol 0248" manufactured by Sumika Covestro Urethane Co., Ltd., average molecular weight: 6000, number of functional groups: 3) as the polyol component (B), a hindered phenol compound ("IRGANOX (registered trademark) 1010" manufactured by BASF) as the antioxidant (D) was formulated as appropriate, and further, 3 parts by mass of diethanolamine as the crosslinking agent, 5 parts by mass of water as the foaming agent, 0.6 parts by mass of an amine catalyst A ("KAOLIZER (registered trademark) No. 31" manufactured by Kao Corporation), 0.4 parts by mass of an amine catalyst B ("TOYOCAT (registered trademark) MR" manufactured by Tosoh Corporation), 0.3 parts by mass of a silicone-based foam stabilizer ("VORASURF (registered trademark) SZ-1336" manufactured by Dow Toray Co., Ltd.), and 2 parts by mass of a pigment ("FT 1576 Black" manufactured by Dainichiseika Color & Chemicals Mfg. Co., Ltd.) were added and mixed to prepare a premix polyol.

Next, as the isocyanate component (A), a modified MDI ("SBU Isocyanate 0632" manufactured by Sumika Bayer Urethane Co., Ltd.) containing a mixture of 2,4'-MDI and 4,4'-MDI and a modified product obtained by carbodiimidizing 4,4'-MDI, and an MDI prepolymer ("SBU Isocyanate S234" manufactured by Sumika Bayer Urethane Co., Ltd.) were mixed as appropriate to prepare an isocyanate raw material.

Subsequently, the prepared premix polyol and the isocyanate raw material were mixed such that an isocyanate index was 1.0 to 1.1, and further, a phosphate ester ("ADEKA STAB (registered trademark) PFR" manufactured by ADEKA Corporation) as the flame-retardant plasticizer (C) was added as appropriate and mixed to prepare a urethane resin composition. The formulation amounts of each component in the urethane resin composition are shown in Table 1 below. Then, the urethane resin composition was injected into a cavity of a mold, sealed, and foam-molded at a mold temperature of 50°C for 5 minutes to manufacture 13 types of samples of the polyurethane foam. The density of the polyurethane foam of each of the samples was set to 0.12 g/cm³.

### <Evaluation of polyurethane foam>

The manufactured samples were evaluated in terms of rigidity, flame retardancy, and soundproofing properties.

### [Evaluation method]

### (1) Rigidity

Asker C hardnesses of the samples were measured using an "ASKER Durometer Type C" manufactured by Kobunshi Keiki Co., Ltd.

### (2) Flame retardancy

Strip-shaped test pieces (test pieces in normal condition) with a length of 127 mm, a width of 12.7 mm, and a thickness of 12.7 mm were prepared from the manufactured samples. First, a horizontal burning test as specified in the UL94 standard was conducted on the test pieces in the normal condition. Next, the test pieces in the normal condition were placed in an oven at 135°C and held for 168 hours to be thermally aged (first thermal aging), and then the same test was conducted. Separately, the test pieces in the normal condition were placed in an oven at 135°C and held for 336 hours to be thermally aged (second thermal aging), and then the same test was conducted. Furthermore, the test pieces in the normal condition were placed in an oven at 135°C and held for 600 hours to be thermally aged (third thermal aging), and then the same test was conducted. Then, the flame retardancy was evaluated as high (indicated by ∘ in Table 1) in the case of satisfying the determination criteria for the HB level (burning rate not exceeding 38.1 mm per minute), and the flame retardancy was evaluated as insufficient (indicated by × in the same table) in the case of not satisfying the determination criteria.

### (3) Soundproofing properties

A cross-section of the polyurethane foam was observed using a microscope, and if open cells were formed, the polyurethane foam was evaluated as having the desired soundproofing properties. In the evaluation column of Table 1, cases where open cells were formed are indicated as soundproofing properties being "present".

### [Evaluation results]

Table 1 summarizes the components of the urethane resin compositions and the evaluation results of the polyurethane foams.

**[Table 1]**

| Components of urethane resin composition | | | Sample 1 | Sample 2 | Sample 3 | Sample 4 | Sample 5 | Sample 6 | Sample 7 | Sample 8 | Sample 9 | Sample 10 | Sample 11 | Sample 12 | Sample 13 |
|---|---|---|---|---|---|---|---|---|---|---|---|---|---|---|---|
| Premix polyol [parts by mass] | Polyol component (B): polyether polyol | | 100 | 100 | 100 | 100 | 100 | 100 | 100 | 100 | 100 | 100 | 100 | 100 | 100 |
| | Crosslinking agent | | 3 | 3 | 3 | 3 | 3 | 3 | 3 | 3 | 3 | 3 | 3 | 3 | 3 |
| | Foaming agent | | 5 | 5 | 5 | 5 | 5 | 5 | 5 | 5 | 5 | 5 | 5 | 5 | 5 |
| | Amine catalyst A | | 0.6 | 0.6 | 0.6 | 0.6 | 0.6 | 0.6 | 0.6 | 0.6 | 0.6 | 0.6 | 0.6 | 0.6 | 0.6 |
| | Amine catalyst B | | 0.4 | 0.4 | 0.4 | 0.4 | 0.4 | 0.4 | 0.4 | 0.4 | 0.4 | 0.4 | 0.4 | 0.4 | 0.4 |
| | Foam stabilizer | | 0.3 | 0.3 | 0.3 | 0.3 | 0.3 | 0.3 | 0.3 | 0.3 | 0.3 | 0.3 | 0.3 | 0.3 | 0.3 |
| | Pigment | | 2 | 2 | 2 | 2 | 2 | 2 | 2 | 2 | 2 | 2 | 2 | 2 | 2 |
| | Antioxidant (D): hindered phenol compound | | 5 | 5 | 5 | 5 | 5 | 6 | 4 | 5 | 5 | 5 | 5 | 7 | 3 |
| Isocyanate component (A) [parts by mass] | MDI isomer mixture and modified product | | 73.6 | 61.4 | 48.6 | 73.9 | 73.2 | 73.6 | 73.6 | 85.5 | 35.4 | 74.3 | 73.0 | 73.6 | 73.6 |
| | MDI prepolymer | | 46.9 | 61.4 | 76.4 | 46.5 | 47.3 | 46.9 | 46.9 | 32.9 | 92.0 | 46.0 | 47.6 | 46.9 | 46.9 |
| Flame-retardant plasticizer (C) [parts by mass] | Phosphate ester | | 13.4 | 13.6 | 13.9 | 16.4 | 9.1 | 13.4 | 13.4 | 13.2 | 14.2 | 21.2 | 6.3 | 13.4 | 13.4 |
| Content ratio [mass%] of each component in polyurethane foam | Modified product of isocyanate component (A) | | 29.4 | 24.3 | 19.0 | 29.2 | 29.8 | 29.3 | 29.6 | 34.5 | 13.7 | 28.8 | 30.0 | 29.2 | 29.7 |
| | Flame-retardant plasticizer (C) | | 5.4 | 5.4 | 5.4 | 6.5 | 3.7 | 5.3 | 5.4 | 5.3 | 5.5 | 8.2 | 2.6 | 5.3 | 5.4 |
| | Antioxidant (D) | | 2.0 | 2.0 | 2.0 | 2.0 | 2.0 | 2.4 | 1.6 | 2.0 | 1.9 | 1.9 | 2.1 | 2.8 | 1.2 |
| Density [g/cm³] of polyurethane foam | | | 0.12 | 0.12 | 0.12 | 0.12 | 0.12 | 0.12 | 0.12 | 0.12 | 0.12 | 0.12 | 0.12 | 0.12 | 0.12 |
| Evaluation of polyurethane foam | Rigidity | Asker C hardness | 67 | 66 | 65 | 65 | 69 | 68 | 68 | 69 | 62 | 60 | 70 | 68 | 70 |
| | Flame retardancy UL94-HB horizontal burning test | Normal condition | ○ | ○ | ○ | ○ | ○ | ○ | ○ | × | ○ | ○ | × | × | ○ |
| | | Thermal aging 135°C × 168 hr | ○ | ○ | ○ | ○ | ○ | ○ | ○ | × | ○ | ○ | × | ○ | ○ |
| | | Thermal aging 135°C × 336 hr | ○ | ○ | ○ | ○ | ○ | ○ | ○ | × | ○ | ○ | × | | × |
| | | Thermal aging 135°C × 600 hr | ○ | ○ | ○ | ○ | ○ | ○ | ○ | × | ○ | ○ | × | ○ | × |
| | Soundproofing properties | | Present | Present | Present | Present | Present | Present | Present | Present | Present | Present | Present | Present | Present |

As shown in Table 1, Samples 1 to 7 had a high rigidity in addition to soundproofing properties. Further, Samples 1 to 7 exhibited flame retardancy at the HB level of the UL94 standard not only in the normal condition but also after thermal aging. Although Samples 8 to 13 have sound absorption properties, Samples 8 to 13 showed inferior results in both rigidity and flame retardancy compared to Samples 1 to 7. Specifically, Sample 8, which had a higher content ratio of the modified product compared to Samples 1 to 7, showed decreased flame retardancy. Conversely, Sample 9, which had a lower content ratio of the modified product, showed a lower rigidity. Sample 10, which had a higher content ratio of the flame-retardant plasticizer compared to Samples 1 to 7, showed a lower rigidity. Conversely, Sample 11, which had a lower content ratio of the flame-retardant plasticizer, showed decreased flame retardancy. Sample 12, which had a higher content ratio of the antioxidant compared to Samples 1 to 7, showed a high flame retardancy after thermal aging, but the flame retardancy in the normal condition was decreased. Conversely, Sample 13, which had a lower content ratio of the antioxidant, showed a high flame retardancy in the normal condition and after 168 hours of thermal aging, but the effect of suppressing thermal decomposition of polyurethane was insufficient, and the flame retardancy after thermal aging of 336 hours or more was decreased.

### Industrial Applicability

The flame-retardant soundproofing material for vehicles of the disclosure is useful as a soundproofing material to be disposed around a fuel pipe, a transmission, etc. in addition to an engine cover, a side cover, and an oil pan cover.

## Claims

1. A flame-retardant soundproofing material for vehicles comprising a polyurethane foam obtained by foam-molding a urethane resin composition,
wherein the urethane resin composition comprises an isocyanate component (A), a polyol component (B), a flame-retardant plasticizer (C), and an antioxidant (D), and
the isocyanate component (A) comprises a mixture of 2,4'-diphenylmethane diisocyanate and 4,4'-diphenylmethane diisocyanate, and one or more modified products selected from a carbodiimide-modified product and a uretonimine-modified product of at least one of 2,4'-diphenylmethane diisocyanate and 4,4'-diphenylmethane diisocyanate of the mixture.

2. The flame-retardant soundproofing material for vehicles according to claim 1, wherein the modified product of the isocyanate component (A) has a content ratio of 19 mass% or more and 30 mass% or less with the total urethane resin composition being 100 mass%.

3. The flame-retardant soundproofing material for vehicles according to claim 1, wherein the flame-retardant plasticizer (C) has a content ratio of 3.7 mass% or more and 6.5 mass% or less with the total urethane resin composition being 100 mass%.

4. The flame-retardant soundproofing material for vehicles according to claim 1, wherein the flame-retardant plasticizer (C) comprises a phosphate ester.

5. The flame-retardant soundproofing material for vehicles according to claim 1, wherein the antioxidant (D) has a content ratio of 1.6 mass% or more and 2.4 mass% or less with the total urethane resin composition being 100 mass%.

6. The flame-retardant soundproofing material for vehicles according to claim 1, wherein the antioxidant (D) comprises a hindered phenol compound.

7. The flame-retardant soundproofing material for vehicles according to claim 1, wherein the flame-retardant plasticizer (C) comprises a phosphate ester, and the antioxidant (D) comprises a hindered phenol compound.

8. The flame-retardant soundproofing material for vehicles according to claim 1,
wherein with the total urethane resin composition being 100 mass%,
the modified product of the isocyanate component (A) has a content ratio of 19 mass% or more and 30 mass% or less,
the flame-retardant plasticizer (C) has a content ratio of 3.7 mass% or more and 6.5 mass% or less, and
the antioxidant (D) has a content ratio of 1.6 mass% or more and 2.4 mass% or less.

9. The flame-retardant soundproofing material for vehicles according to claim 8, wherein the flame-retardant plasticizer (C) comprises a phosphate ester, and the antioxidant (D) comprises a hindered phenol compound.
